# EUROPEAN PATENT SPECIFICATION

(11) **EP 2 316 270 B1**
(45) Date of publication and mention of the grant of the patent: **11.12.2013**
(21) Application number: 09174128.0
(22) Date of filing: 27.10.2009
(51) Int. Cl.: A21C 9/08

(54) **Device and method for pinching at least two dough parts**
Vorrichtung und Verfahren zum Quetschen von mindestens zwei Teigteilen
Dispositif et procédé pour pincer au moins deux morceaux de pâte

(43) Date of publication of application: 04.05.2011
(73) Proprietor: Rademaker B.V., 4104 BC Culemborg (NL)
(72) Inventor: Van Blokland, Johannes, Josephus, Antonius, 4112 JH, Beusichem (NL)
(74) Representative: van Oeffelt, Abraham

(56) References cited:
- EP-A1- 0 490 190
- EP-A2- 1 709 872
- WO-A1-2008/133114
- US-A- 4 582 472
- US-A1- 2003 066 433

## Description

The present invention relates to a device and method for pinching at least two dough parts.

Pinching (or squeezing or clamping together of) dough parts commonly takes place in processes where the dough parts should be adjacent or connected during at least a part of a preparation or baking process. In the process of baking croissants for example, the tips of the legs of a croissant are pinched in order to keep the croissant in its curved form, despite of a bias or tension in the dough that tends to straighten the dough product. During the baking, the tips of the legs may or may not separate or be separated again.

In the art, pinching is either performed manually, or - in an automated process - on a number of dough parts at a time, by pincers that are operated automatically. The pincers are triggered at the same time at an instance that is based on a "known" position of the dough parts on a conveyor that leads them across the pincers. In order to obtain such a known position of the dough parts, an outlining unit, for example comprising a plurality of parallel endless belts, is required.

The US Patent 4 582 472 describes a device for pinching croissants. The international patent application WO 2008/133114 described a device for connecting the ends of a rod shaped dough piece.

Pinching according to the art has several disadvantages, slowness being one of them. In the case of the above described automated process wherein dough pieces with parts to be pinched are conveyed batch wise, the reason therefore is that the simultaneous operation of multiple pairs of pincers requires outlined dough parts, and units for outlining dough parts form a bottleneck in a speed of the dough line.

It is a goal of the present invention to provide a method and device for pinching at least two dough parts lacking the above disadvantages.

The invention therefore proposes a device for pinching at least two dough parts as defined in claim 1 and a related method as defined in claim 10.

Since the drivable pincers are provided with a sensor, the need of synchronising the drive of the pincers with a conveyor, such as an endless belt, on which the dough parts to be pinched are positioned at beforehand known positions is no longer necessary, for the device detects the presence of the dough parts, and then pinches them. Evidently, the pincers are oriented in such way that the through put of dough parts to be pinched takes place between them. Driving the pincers can take place by means of an electrical drive with a controller, for example a servo system, that acts upon input from the sensor. Said sensor can be embodied by means of a mechanical sensor, or an optical sensor, arranged in a bridge or on a port, or any known sensor for detecting objects.

The device further comprises a conveyor for conveying the dough parts. The pair of drivable pincers is arranged along the conveyor, and movable with at least a directional component towards each other, and the sensor is arranged upstream in the direction of conveyance with respect to the pair of pincers. Thereby the presence of dough parts can be detected at a predetermined distance before they reach the pincers. In the case of multiple sets of pincers, a further advantage is reached by providing each pair of pincers with its own sensor, and thus eliminating the need to synchronise the dough parts, and also the need for a common control system for the plurality of sets of pincers.

In an embodiment, the pincers are rotatably arranged at a mutual distance. Both pincers are configured to rotate in opposite directions, causing a directional component of at least the working surfaces of the pincers towards each other, and as a result also to the dough parts. Moreover, this way also a tangential movement with respect to the dough parts is obtained, eliminating the need for the pinching device as a whole to move along with the conveyor and/or the dough parts to be pinched. With respect to the state of the art, a major reduction of complexity and an increased operation speed can thus be obtained.

In order to avoid damaging the dough parts by the pincers, at least one, and preferably both pincers comprise an essentially flat working surface, with at least one knotted edge. This may be the leading edge in particular, but preferably sharp protrusions of any kind are omitted. In general, the shape of the contact surfaces of the pincers may be designed according to a specific application or type of dough to be used, and may be textured for that purpose, or provided with a surface layer of a specific material, such as stainless steel. The pincers may be made from or provided with HMPE (High Modulus Poly Ethylene) or stainless steel.

In an automated process, where a plurality of dough parts is conveyed at a time, or where dough parts are conveyed batch wise, a device may be preferred comprising a plurality of pairs of drivable pincers, arranged at mutual distances in a direction perpendicular to a direction of conveyance of the dough parts.

The dough parts are generally arranged in parallel rows on the conveyor, for example five rows. In the case of croissants, and especially bended croissants, the croissants may not be perfectly outlined on the conveyor, as a result of preceding process steps, such as rolling and curving the croissants. For this purpose, the present invention is especially advantageous, since the various pairs of drivable pincers do not need to be controlled synchronously, as they all have their own sensors. That means that a conveyor can be operated at a continuous speed, without interruptions. Especially in combination with rotating pincers as described above, increased throughput speeds can be obtained with respect to the prior art.

In order to be adjustable to a variable number of rows of dough parts , the plurality of pairs of drivable pincers can be arranged displaceable in the direction perpendicular to a direction of conveyance of the dough parts. Herewith, the distance between the pincers can be altered, as to match the distance between the pairs of dough pieces to be pinched. It is also possible to change the number of pairs of pincers that are at practice at the same time. For that purpose, at least one pair of pincers can be displaceable to a parking position, outside a path of conveyance of the dough parts. With this feature it is possible to adapt the device to the number of pairs of dough parts to be pinched in a batch.

The pairs of pincers can be embodied as a unit together with drive means, the sensor and control means, and as such be arranged movable along a track. Such track can be a bar or a rail system, and it is preferably provided with indication means such as a ruler, and/or predetermined default positions for the unit, in order to facilitate an operator or a mechanic to quickly change the settings of the device.

In another embodiment all sets of pincers are displaceable out of the path of conveyance of the dough parts together. For that purpose, the bar or rail system carrying the unit may be provided with a lever, or be arranged on a frame that can be lifted or moved aside. With this feature, it is possible to determine dynamically whether or not to pinch the dough parts conveyed.

The sensor is configured to determine an extreme (such as a rear or a front flank) of the dough parts to be pinched. In case of a bent croissant, wherein the tips of the legs need to be pinched, it is possible that the legs are oriented at the leading side, or at the lagging side. In both cases, the moment of pinching is adjusted in order to influence the amount of overlap between the pincers and the dough parts, and thus to influence the length over which the dough parts are pinched. This length, and other parameters can be adjusted by an operator, for example via a user interface. Being able to determine the exact position and length of the pinching is even more desired when pinching filled dough products, such as croissants with jam, because a wrong position could easily lead to a leaking filling of the product, possibly resulting furthermore in pollution of the device.

The invention will now be elucidated into more detail with reference to the following figures, wherein:
- Figure 1 shows a dough piece with parts to be pinched, and thus pinched dough parts;
- Figure 2a shows a device according to the present invention;
- Figure 2b shows a detail from the device of figure 2a;
- Figure 3 shows a configuration with a plurality of devices from figure 2a;
- Figure 4 shows 2 alternative designs of the pincers.

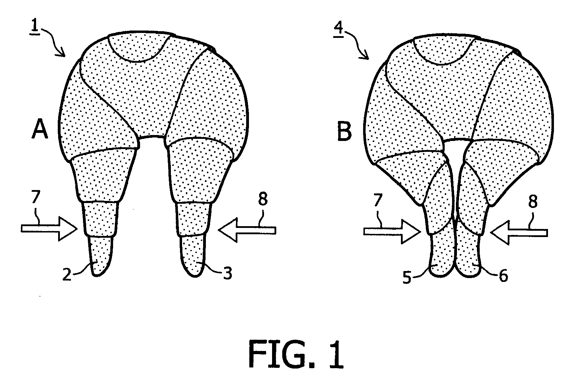

Figure 1 shows a first dough piece 1, in the case shown a croissant, with two dough parts 2 and 3, formed by the legs of the croissant, that should be pinched in order to keep the croissant in its round shape during at least part of the preparing and/or baking process. For example during transfer of the croissant from a first conveyor to a subsequent second conveyor, during proving, freezing or during the baking itself, wherein forces occurring when the dough rises should be counteracted. Thereto, legs 2 and 3 should be pinched in the direction of the arrows 7 and 8. A croissant 4 is thus obtained, wherein dough parts or legs 5 and 6 are stuck together.

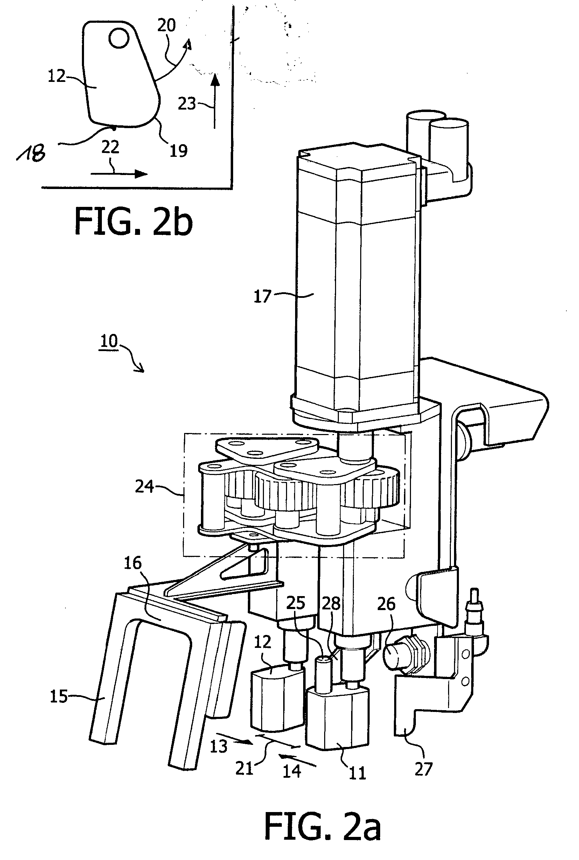

Figure 2a shows a device 10 for pinching at least two dough parts according to the present invention, comprising a pair of drivable pincers 11, 12 movable with at least a directional component 13, 14 towards each other, a sensor 15, embodied by a port 16 provided with detection means, for providing a control signal upon sensing a presence of dough parts and a controller, in the embodiment shown embodied by a servo system, for driving the pincers based on the control signal from the sensor 15. Both pincers 11, 12 are rotatably 20 arranged at a mutual distance 21, and they comprise an essentially flat working surface 18, with at least one knotted edge 19, as depicted in the detailed top view of figure 2b. The knotted edge is the leading edge with a directional component 22 toward the dough part to be pinched, and by knotting or rounding its edge, damaging the dough is avoided when rotating 20 the pincer 12. Evidently the same goes for (non-depicted) pincer 11. Upon rotation 20, the working surface 18 obtains a speed component in the transversal direction 23, which is the direction of conveyance of the dough parts to be pinched and/or the converted dough products. By programming the controllable motor 17 the rotational speed of the pincers 12, 11 can be adjusted. Depending on the type of dough used, the speed in transversal direction can be lower, but is preferred to be equal or even somewhat higher than the speed of conveyance of the dough parts, in order to avoid ripping the dough. The rotational speed of the pincers 11, 12 may be constant during a pinching operation, but it may also be controlled by the controller and /or the servo that drives them to compensate for the sinoidal curve the transversal component 23 of the speed of the working surface 18. The distance 21 between the pincers 11, 12 is adjustable, and planetary gearwheels 24 are provided to keep the mutual orientation between the pincers 11, 12 during such adjustments. Detection means 25, 26 for the angular orientation of the pincers are present, and may be used to return the pincers to a default position after and/or before pinching.

Furthermore, scrapers 27 and 28 are shown, for cleaning respective pincers 11, 12. The scrapers are especially advantageous in the shown case where rotational pincers 11, 12 are used, since in these configurations, the dough and the pincers may have transversal speed differences during at least part of the mutual contact.

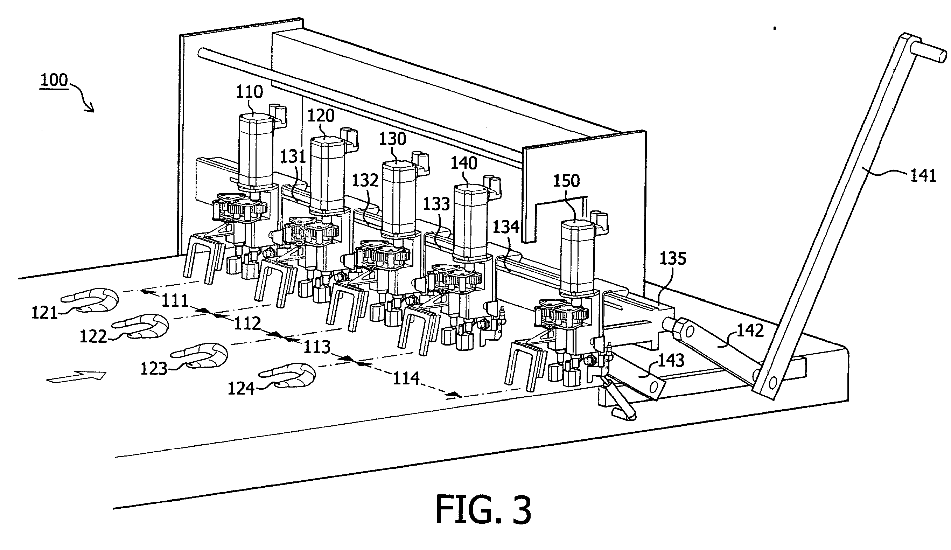

Figure 3 shows a device 100 according to the present invention for simultaneously pinching a plurality of pairs of dough parts, comprising five pairs 110, 120, 130, 140, 150 of drivable pincers, arranged at mutual distances 111, 112, 113, 114 in a direction perpendicular to a direction of conveyance of the dough parts. The mutual differences correspond to the distances between dough products 121, 122, 123 and 124. In order to enable use with different distances or different amounts of dough products per batch, the pairs 110, 120, 130, 140, 150 of drivable pincers are arranged displaceable in the direction perpendicular to a direction of conveyance of the dough parts. For that reason, slotted holes 131, 132, 133, 134 are provided in carrying bar 135. The bar 135 may be provided with a ruler or other indications for the exact location and/or mutual distance between the pairs 110, 120, 130, 140, 150 of drivable pincers. In figure 3, one pair of pincers 150 has been moved to a parking position, outside a path of conveyance of the dough parts. A like parking position can - in the case shown - be used to enable switching between 4 and 5 dough products to be pinched at a time. Evidently, configurations wherein one can switch between other numbers can be imagined as well. The device further comprises a lever 141 with lever arms 142 and 143, which can be used to lift the bar 135 with the pairs 110, 120, 130, 140, 150 of drivable pincers all at once. This lever may be used in order to switch directly from pinched to non-pinched production modes of dough products. In order to be able to control the length of the pinched part, the amount of time between detection of the dough parts or the distance of translation of the conveyor and triggering the pincers may be varied. The active surface of the pincers may be oversized for the actual purpose, so that any desired length of pinch can be obtained.

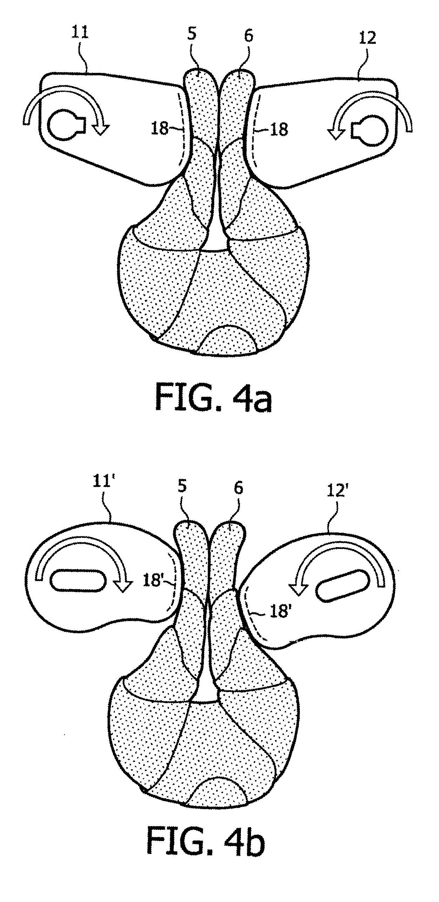

Figure 4a shows the pincers 11 and 12 from the devices 10 and 100 in more detail. Dough parts 5 and 6 are clamped in between the working surfaces 18 of the pincers 11 and 12.

Figure 4b shows an alternative embodiment with pincers 11' and 12', having more rounded working surfaces 18', adapted for pinching more fragile types of dough parts.

## Claims

1. Device for pinching at least two dough parts (2, 3), such as two legs of a croissant, comprising:
- a conveyor for conveying the dough parts (2, 3);
- a pair of drivable pincers (11, 12), arranged along the conveyor, movable with at least a directional component (13, 14) towards each other,
- a sensor (15), arranged upstream in the direction of conveyance with respect to the pair of pincers (11, 12), and for providing a control signal upon sensing a presence of the dough parts (2, 3);
- a controller, for driving the pincers based on the control signal,
**characterised in that**
- the moment of pinching is adjustable, so that the length of the overlap of the pincers and the dough parts is adjustable.

2. Device according to claim 1, wherein the pincers (11, 12) are rotatably arranged at a mutual distance (21).

3. Device according to claim 2, wherein at least one of the pincers comprises an essentially flat working surface (18), with at least one knotted edge (19).

4. Device according to any of the preceding claims, comprising a plurality of pairs of drivable pincers (110, 120, 130, 140, 150), arranged at mutual distances (111, 112, 113, 114) in a direction perpendicular to a direction of conveyance of the dough parts (121, 122, 123, 124).

5. Device according to claim 4, wherein the plurality of pairs of drivable pincers (110, 120, 130, 140, 150) are arranged displaceable in the direction perpendicular to a direction of conveyance of the dough parts (121, 122, 123, 124).

6. Device according to claim 5, wherein at least one pair of pincers (150) can be displaceable to a parking position, outside a path of conveyance of the dough parts.

7. Device according to any of the preceding claims, wherein all sets of pincers are displaceable out of the path of conveyance of the dough parts together.

8. Device according to any of the preceding claims, wherein the sensor (15) is configured to detect a front or rear flank of a dough part.

9. Device according to any of the preceding claims, wherein the rotational speed of the pincers (12, 11) is controlled by a controller and /or servo (17) that drives them to compensate for the sinoidal curve the transversal component (23) of the speed of the working surface (18) of the pincers.

10. Method for pinching at least two dough parts (2,3) with a device according to any of the preceding claims, comprising:
- conveying the dough parts to a pinching location;
- detecting the presence of the dough parts by sensing means upstream with respect to the pinching location in a conveying direction;
- providing a control signal upon sensing the presence of the dough parts;
- determining and adjusting the moment of pinching based on the control signal;
- operating pincers upon detection of the dough parts.

11. Method of pinching dough parts according to claim 10, comprising:
- pinching the dough parts by rotating the pincers when the dough parts at a moment where the dough parts are in between the pincers.

12. Method according to claim 11, wherein the conveyance of the dough parts is uninterrupted during pinching.

13. Method according to any of the claims 11 or 12, comprising:
- controlling the length of the pinched part by varying the amount of time or a distance between detection of the dough parts and triggering the pincers.

14. Method according to any of the claims 11 - 13, wherein
- a speed of the pincers is controlled in dependence of a speed of conveying the dough parts.

## Patentansprüche

1. Vorrichtung zum Quetschen von mindestens zwei Teigteilen (2, 3), wie zum Beispiel zwei Schenkeln eines Croissants, umfassend:
- eine Fördereinrichtung zum Befördern der Teigteile (2, 3);
- ein Paar entlang der Fördereinrichtung angeordneter antreibbarer Quetschvorrichtungen (11, 12), die mit mindestens einer Richtungskomponente (13, 14) zueinander beweglich sind,
- einen Sensor (15), der in Förderrichtung bezüglich des Paars Quetschvorrichtungen (11, 12) stromaufwärts angeordnet ist und der Bereitstellung eines Steuersignals bei Erfassen einer Gegenwart der Teigteile (2, 3) dient;
- eine Steuerung zum Antreiben der Quetschvorrichtungen auf Grundlage des Steuersignals,
**dadurch gekennzeichnet, dass**
- das Quetschmoment einstellbar ist, so dass die Länge der Überlappung der Quetschvorrichtungen und der Teigteile einstellbar ist.

2. Vorrichtung nach Anspruch 1, wobei die Quetschvorrichtungen (11, 12) in einem gegenseitigen Abstand (21) drehbar angeordnet sind.

3. Vorrichtung nach Anspruch 2, wobei mindestens eine der Quetschvorrichtungen eine im Wesentlichen flache Arbeitsfläche (18) mit einem ausgebuchteten Rand (19) umfasst.

4. Vorrichtung nach einem der vorhergehenden Ansprüche, die mehrere Paare antreibbarer Quetschvorrichtungen (110, 120, 130, 140, 150) umfasst, die in gegenseitigen Abständen (111, 112, 113, 114) in einer senkrecht zu einer Förderrichtung der Teigteile (121, 122, 123, 124) verlaufenden Richtung angeordnet sind.

5. Vorrichtung nach Anspruch 4, wobei die mehreren Paare antreibbarer Quetschvorrichtungen (110, 120, 130, 140, 150) in der senkrecht zu einer Förderrichtung der Teigteile (121, 122, 123, 124) verlaufenden Richtung verschiebbar angeordnet sind.

6. Vorrichtung nach Anspruch 5, wobei mindestens ein Paar Quetschvorrichtungen (150) in eine Parkstellung außerhalb einer Förderbahn der Teigteile verschiebbar sein kann.

7. Vorrichtung nach einem der vorhergehenden Ansprüche, wobei alle Quetschvorrichtungssätze zusammen aus der Förderbahn der Teigteile verschiebbar sind.

8. Vorrichtung nach einem der vorhergehenden Ansprüche, wobei der Sensor (15) dazu konfiguriert ist, eine vordere oder eine hintere Flanke eines Teigteils zu detektieren.

9. Vorrichtung nach einem der vorhergehenden Ansprüche, wobei die Drehgeschwindigkeit der Quetschvorrichtungen (12, 11) durch eine Steuerung und/oder eine Servoeinrichtung (17) gesteuert wird, die sie zum Ausgleich der Sinuskurve der Querkomponente (23) der Geschwindigkeit der Arbeitsfläche (18) der Quetschvorrichtungen antreibt.

10. Verfahren zum Quetschen von mindestens zwei Teigteilen (2, 3) mit einer Vorrichtung nach einem der vorhergehenden Ansprüche, umfassend:
- Befördern der Teigteile zu einer Quetschstelle;
- Detektierten der Gegenwart der Teigteile durch Erfassungsmittel stromaufwärts bezüglich der Quetschstelle in einer Förderrichtung;
- Bereitstellen eines Steuersignals bei Erfassen der Gegenwart der Teigteile;
- Bestimmen und Einstellen des Quetschmoments auf Grundlage des Steuersignals;
- Betreiben der Quetschvorrichtungen bei Detektion der Teigteile.

11. Verfahren zum Quetschen von Teigteilen nach Anspruch 10, umfassend:
- Quetschen der Teigteile durch Drehen der Quetschvorrichtungen, zu einem Zeitpunkt, zu dem sich die Teigteile zwischen den Quetschvorrichtungen befinden.

12. Verfahren nach Anspruch 11, wobei die Beförderung der Teigteile während des Quetschens ununterbrochen ist.

13. Verfahren nach Anspruch 11 oder 12, umfassend:
- Steuern der Länge des gequetschten Teils durch Ändern der Zeitdauer oder eines Abstands zwischen der Detektion der Teigteile und dem Auslösen der Quetschvorrichtungen.

14. Verfahren nach einem der Ansprüche 11 - 13, wobei
- eine Geschwindigkeit der Quetschvorrichtungen in Abhängigkeit von einer Fördergeschwindigkeit der Teigteile gesteuert wird.

## Revendications

1. Dispositif pour pincer au moins deux parties de pâte (2, 3), comme deux pattes d'un croissant, comprenant :
- un transporteur pour transporter les parties de pâte (2, 3) ;
- une paire d'éléments de pincement pouvant être entraînés (11, 12), disposés le long du transporteur, pouvant être bougés avec au moins une composante directionnelle (13, 14) l'un vers l'autre,
- un capteur (15), disposé en amont dans la direction de transport par rapport à la paire d'éléments de pincement (11, 12), et pour fournir un signal de commande lors de la détection d'une présence des parties de pâte (2, 3) ;
- un dispositif de commande, pour entraîner les éléments de pincement en se basant sur le signal de commande,
**caractérisé en ce que**
- le moment de pincement est réglable, de manière à ce que la longueur du recouvrement des parties de pâte par les éléments de pincement soit réglable.

2. Dispositif selon la revendication 1, dans lequel les éléments de pincement (11, 12) sont disposés de manière rotative à une distance mutuelle (21).

3. Dispositif selon la revendication 2, dans lequel au moins un des éléments de pincement comprend une surface de travail essentiellement plate (18), avec au moins un bord noueux (19).

4. Dispositif selon l'une quelconque des revendications précédentes, comprenant une pluralité de paires d'éléments de pincement pouvant être entraînés (110, 120, 130, 140, 150), disposés à des distances mutuelles (111, 112, 113, 114) dans une direction perpendiculaire à une direction de transport des parties de pâte (121, 122, 123, 124).

5. Dispositif selon la revendication 4, dans lequel la pluralité de paires d'éléments de pincement pouvant être entraînés (110, 120, 130, 140, 150) sont disposés de façon à être déplaçables dans la direction perpendiculaire à une direction de transport des parties de pâte (121, 122, 123, 124).

6. Dispositif selon la revendication 5, dans lequel au moins une paire d'éléments de pincement (150) peut être déplaçable dans une position de garage, hors d'un trajet de transport des parties de pâte.

7. Dispositif selon l'une quelconque des revendications précédentes, dans lequel tous les ensembles d'éléments de pincement sont déplaçables hors du trajet de transport des parties de pâtes ensemble.

8. Dispositif selon l'une quelconque des revendications précédentes, dans lequel le capteur (15) est configuré de façon à détecter un flanc avant ou un flanc arrière d'une partie de pâte.

9. Dispositif selon l'une quelconque des revendications précédentes, dans lequel la vitesse de rotation des éléments de pincement (12, 11) est commandée par un dispositif de commande et/ou un dispositif servo (17) qui les entraîne de façon à compenser la courbe sinusoïdale de la composante transversale (23) de la vitesse de la surface de travail (18) des éléments de pincement.

10. Dispositif pour pincer au moins deux parties de pâte (2, 3) avec un dispositif selon l'une quelconque des revendications précédentes, comprenant :
- le transport des parties de pâte jusqu'à un emplacement de pincement ;
- la détection de la présence des parties de pâte par un moyen de détection en amont par rapport à l'emplacement de pincement dans une direction de transport ;
- la fourniture d'un signal de commande lors de la détection de la présence des parties de pâte ;
- la détermination et le réglage du moment de pincement en se basant sur le signal de commande ;
- l'actionnement des éléments de pincement lors de la détection des parties de pâte.

11. Procédé de pincement des parties de pâte selon la revendication 10, comprenant :
- le pincement des parties de pâte en tournant les éléments de pincement à un moment où les parties de pâte se trouvent entre les éléments de pincement.

12. Procédé selon la revendication 11, dans lequel le transport des parties de pâte est ininterrompu pendant le pincement.

13. Procédé selon l'une quelconque des revendications 11 ou 12, comprenant :
- la commande de la longueur de la partie pincée en variant la quantité de temps ou une distance entre la détection des parties de pâte et le déclenchement des éléments de pincement.

14. Procédé selon l'une quelconque des revendications 11 à 13, dans lequel
- une vitesse des éléments de pincement est commandée en dépendance d'une vitesse du transport des parties de pâte.
